# EUROPEAN PATENT APPLICATION

(11) **EP 1 493 504 A2**
(43) Date of publication of application: **05.01.2005**
(21) Application number: 04103069.3
(22) Date of filing: 30.06.2004
(51) Int. Cl.: B09B 3/00, C02F 11/00

(54) **Procedure for the inertisation of inorganic wastes**

(30) Priority: 03.07.2003 ES 200301640
(71) Applicant: Grau Almirall, Josep, 08740 Sant Andreu De La Barca (ES)
(72) Inventor: Grau Almirall, Josep, 08740 Sant Andreu De La Barca (ES)
(74) Representative: Ponti Sales, Adelaida

(57) **Abstract**

Procedure which is characterised in that it includes the stages of: preparation of a mixture which includes:between 10% and 90% of inorganic waste expressed in dry weight; and between 5% and 45% of sludge expressed in dry weight; the rest being water; in which said sludge includes at least 15% of fibre expressed in dry weight; the stage of stirring the prepared mixture, and optionally, the stage of carrying out breaking down, and, finally, the stage of compaction and agglomeration of the mixture thus prepared. It permits the inertisation of said wastes at low economic cost. The product obtained has sufficient mechanical resistance to be piled on landfill sites without problems of fines generation.

## Description

### Field of the invention

This invention relates to a procedure for the inertisation of inorganic wastes and to the utilisation of a mixture for carrying out said inertisation.

### Background of the invention

Known in the art are thermal processes which are carried out at high temperatures, exceeding 800°C, such as the incineration of municipal solid wastes or obtaining steel from scrap materials, which processes generate inorganic wastes containing heavy metals, such as powders and ashes.

Said inorganic wastes have a heavy metals content in their leachate which classifies them as special wastes, according to the specifications established by standard DIN 38414-S4, for which reason they can only be placed on landfill sites specially designed for wastes with a high toxicity level. This fact makes the management of said wastes more expensive and difficult.

Various solutions have been proposed to give way out to these inorganic wastes. Reutilisation is a solution that consists in using the inorganic wastes as raw materials for the manufacture of industrial products such as tiles, colorants, bricks, concretes, etc. This way out does not at present offer a solution to the problem of inorganic wastes because the quantities of wastes necessary for adding to the other raw materials are small, and because it is often necessary to submit said wastes to expensive pre-treatment in order to be able to use them.

Recovering is a solution that consists in treating the inorganic wastes in order to recover, for example, the metals they contain. Known in the art are processes for reprocessing inorganic wastes, such as the hydrometallurgical, pyrometallurgical and mixed processes. Among the best known processes is the industrial process of the pyrometallurgical type, called the Waelz process, for treating steelworks ashes and powders. Said process yields as end products a zinc/lead oxide and an inert slag which is converted into ferrosilite.

The pyrometallurgical and mixed processes have the disadvantage of the high energy cost and cost of maintaining facilities, due to the highly corrosive nature of said processes caused by the presence of halides. The hydrometallurgical processes do not use as much energy, since most of them are carried out at ambient temperature, but they have the disadvantage of generating wastes which must also be treated

Inertisation is another solution to the problem of inorganic wastes from thermal processes. This solution consists in converting said special wastes, by means of physical and/or chemical processes, into inert or non-special wastes according to standard DIN 28414-S4, suitable for disposing of in landfill sites containing wastes with a low-medium level of toxicity for the environment.

There are two types of inertisation processes, namely solidification and stabilisation. Solidification consists in inertisation by adding a sufficient quantity of solidifying material, in order to obtain a nonpolluting mass. Stabilisation consists in inertisation by introducing additives which reduce the polluting nature of the waste. The additives used for stabilising the ashes and powders from thermal processes include cement, lime, soluble silicate, a mixture of glass and limestone and thermosettable organic polymers.

The great disadvantage of the known inertisation processes is the high economic cost in reagents and/or in energy needed to inertise the materials. Moreover, the quantity of additive habitually used for inertisation is not sufficient to ensure a mechanical resistance that allows the wastes to be piled up on the landfill site without problems of fines generation.

### Description of the invention

The objective of this invention is to resolve the disadvantages mentioned above, while also providing other advantages which will be described below.

A first aspect of this invention is to provide a procedure which permits the inertisation of inorganic wastes produced in thermal processes.

A second aspect of this invention is to provide a mixture useful for carrying out said inertisation.

In accordance with the first aspect of the invention a procedure is provide which is characterised in that it includes the following stages:
i) Preparation of a mixture which includes:
   a) between 10% and 90% of inorganic wastes expressed in dry weight; and
   b) between 5% and 45% of sludge expressed in dry weight; the rest being water;
   in which said sludge includes at least 15% fibre expressed in dry weight;
ii) Stirring the mixture prepared in stage i);
iii) Optionally, carrying out a stage of breaking down the mixture obtained in stage ii);
iv) Compaction and agglomeration of the mixture thus prepared.

Surprisingly, this procedure inertises at low economic cost in reagents and in energy the inorganic wastes from thermal processes, so that the latter:
- have a heavy metals content in their leachate that classifies them as inert waste or non-special waste in accordance with standard DIN 38414-S4, which means that they are suitable for disposing of in landfill sites that contain wastes with a low-medium level of toxicity for the environment; and moreover,
- they are of sufficient mechanical resistance to be piled on landfill sites without fines-generation problems. The inertised waste, when subjected to high compression, tends to crack rather than to break down.

Advantageously, the procedure of the invention carries out a co-inertisation or combined inertisation of the sludge and of the inorganic wastes from thermal processes.

In accordance with the second aspect of the invention a mixture is provided which includes:
a) between 10% and 90% of inorganic wastes expressed in dry weight; and
b) between 5% and 45% of sludge expressed in dry weight; the rest being water;
in which said sludge includes at least 15% of fibre expressed in dry weight;
with said mixture being useful for the inertisation of inorganic wastes from thermal processes.

Advantageously, the utilisation of a mixture which includes sludges, as defined in the first aspect of the invention, permits reutilisation of the sludges from the treatment of waste waters as raw material for the inertisation of inorganic wastes.

In this invention, "inertisation" is taken to mean the conversion of a waste in order significantly to reduce its toxicity level for the environment.

In this invention, "inorganic wastes from thermal processes" is taken to mean powders and ashes, which usually contain heavy metals, arising from processes which are carried out at high temperatures, generally exceeding 800°C .

In this invention, "sludge" is taken to mean a residual product proceeding from the treatment and purification of waste waters, or a prepared product with a composition similar to that of a residual product proceeding from the treatment and purification of waste waters.

### Detailed description of the invention

In accordance with the first aspect of the invention a preferable procedure is provided for the inertisation of inorganic wastes from thermal processes, characterised in that it includes the following stages:
i) Preparation of a mixture which includes:
   a) between 35% and 80% of inorganic wastes expressed in dry weight; and
   b) between 10% and 35% of sludge expressed in dry weight; the resting being water;
   in which said sludge includes at least 15% of fibre expressed in dry weight;
ii) Stirring of the mixture prepared in stage i);
iii) Carrying out a stage of breaking down the mixture obtained in stage ii);
iv) Compaction and agglomeration of the mixture thus prepared.

Preferably, said sludge includes at least 25% of fibre expressed in dry weight, and more preferably still, 40% of fibre expressed in dry weight.

Advantageously, with these percentages the product obtained can be disposed of in landfill sites suitable for wastes with a low to medium toxicity level, and moreover it has optimum compression resistance values, which means it can be piled up without it cracking.

Advantageously, by carrying out a stage of breaking down the mixture obtained in stage ii), the material acquires a fine texture, totally free from granules.

Preferably, said sludge also includes at least 15% of calcium carbonate and kaolin, since these minerals enhance the compaction and agglomeration of the mixture which is carried out in stage iv).

Preferably, the procedure according to the first aspect of this invention utilises sludge which is the residual product from the treatment and purification of waste waters. The procedure is thus very viable economically.

More preferably still, said sludge is the residual product resulting from the treatment and purification of the waste waters produced in the papermaking industry, since the cellulose fibres which said sludge possesses make it possible to obtain an inertised product with optimum compression resistance values.

The stage of compaction and agglomeration in accordance with the procedure of the invention is preferably carried out by means of pelletisation or briquettisation, without such techniques placing restrictions upon the invention.

Preferably, when pelletisation of the mixture is carried out pellets are obtained with a diameter between 5 and 20 mm, which facilitates their handling and transportation to a landfill site.

Advantageously, after stage iv) a stage of drying the inertised product to a humidity of less than 1% is carried out, which reduces the cost of transportation to a landfill site.

Preferably, the inorganic wastes include heavy metals, and said wastes come from electric arc furnaces in steelworks and/or municipal solid wastes incineration furnaces.

### Description of preferred embodiments

For a better understanding of the invention three examples of embodiment are outlined below.

In the three examples, the inertisation is carried out with sludges from the treatment of waste waters from the papermaking industry. Said sludges are received in semi-granule form, with a moisture content of 40%, a cellulose fibre content of 45% expressed in dry weight, and a calcium carbonate and kaolin content exceeding 15% expressed in dry weight.

### Example 1: Procedure for the inertisation of electric furnace powders and ashes from the manufacturing of steel.

The inertisation of steelworks electric furnace powders and ashes is carried out with sludges from the treatment of waste waters from the papermaking industry.

The inorganic wastes are received in micronised state and totally dry.

In the first stage of the procedure, a mixture is prepared which includes 50% by weight of steelworks furnace powders and ashes and 50% by weight of sludges with a moisture content of 40%. This dispensing ratio means the preparation of a mixture which includes:
■ 50% of inorganic wastes expressed in dry weight.
■ 30% of sludges expressed in dry weight, with 45% of fibre expressed in dry weight, and
■ 20% of water.

The dry cellulose fibre content of said mixture is 13.50% by weight.

Once dispensing has been completed, the product is discharged directly into the mixing machine in which the mixture is stirred until it has been completely homogenised in terms of moisture.

Once the mixing process has been completed, the mixture resulting from the preceding stage is discharged into a disintegrator mill which breaks the product down until a homogeneous mixture of sludges, water and steelworks furnace powders and ashes has been obtained. The material acquires a fine texture totally free from granules.

The compaction and agglomeration of the broken-down material is carried out in a pelletising machine in which it is extruded to produce pellets of 10 mm in diameter and some 15 mm in length.

The inertisation process comes to an end when the pellets that emerge from the pelletising machine pass directly to the drying zone, from which they emerge with a moisture content of less than 1%.

As Table 1 shows, the pellets obtained with the process of inertisation of the steelworks powders and ashes have a heavy metals content in their leachate that classifies them as non-special waste, in accordance with standard DIN 38414-S4, which means that they can be deposited on landfill sites containing wastes with a medium toxicity level for the environment. This translates itself into cheaper and easier management of said wastes. Moreover, as Table 2 shows, the mechanical resistance to compression of the pellets obtained in the process is high, so they can be piled up on the landfill site without problems of fines generation.

Another advantage of the inertisation process described when compared with the inertisation processes known in the state of the art is its low economic cost in reagents and in energy necessary for carrying out said inertisation.

### Example 2: Procedure for the inertisation of powders and ashes from municipal solid wastes incinerator furnaces.

The inertisation of powders and ashes from municipal solid wastes incinerator furnaces is carried out with sludges from the treatment of waste waters from the papermaking industry.

The organic wastes are received in micronised state and totally dry.

In the first stage of the procedure, a mixture is prepared which includes 50% by weight of powders and ashes from incinerator furnaces and 50% by weight of sludges with 40% moisture content. This dispensing ratio means preparing a mixture which includes:
■ 50% of inorganic wastes expressed in dry weight.
■ 30% of sludges expressed in dry weight, with 45% of fibre expressed in dry weight, and
■ 20% of water.

The dry cellulose fibre content of said mixture is 13.50% by weight.

Once the dispensing has been completed, the process continues as in example 1, until pellets are obtained which, as shown in Tables 1 and 2, also meet the specifications laid down for non-special wastes in standard DIN 38414-S4, and have sufficient mechanical resistance to be piled on landfill sites without problems of fines generation.

### Example 3: Procedure for the inertisation of a mixture of powders and ashes from municipal solid wastes incinerator furnaces and powders and ashes from steelworks electric furnaces.

Inertisation of a mixture of powders and ashes from steelworks electric furnaces and powders and ashes from municipal solid wastes incinerator furnaces is carried out together with sludges from the treatment of waste waters from the papermaking industry.

The inorganic wastes are received in micronised state and totally dry.

In the first stage of the procedure, a mixture is prepared which includes 25% by weight of powders and ashes from steelworks furnaces, 25% by weight of powders and ashes from incinerator furnaces and 50% by weight of sludges with a moisture content of 40%. This dispensing ratio means preparing a mixture which includes:
■ 50% of inorganic wastes expressed in dry weight.
■ 30% of sludges expressed in dry weight, containing 45% of fibre expressed in dry weight, and
■ 20% of water.

The dry cellulose fibre content of said mixture is 13.50% by weight.

Once the dispensing has been completed, the process continues as in example 1, until pellets are obtained which, as shown in Tables 1 and 2, also meet the specifications laid down for non-special wastes in standard DIN 38414-S4, and have sufficient mechanical resistance to be piled on landfill sites without problems of fines generation.

### Results of Tables 1 and 2

Tables 1 and 2 show the heavy metals content of the leachate and the mechanical resistance to compression of the pellets of the inorganic wastes inertised in the three examples of embodiment.

**Table 1:**

| Heavy metals content in the leachate of the inertised inorganic wastes and threshold values of heavy metals content in the leachate in accordance with standard DIN 38414-S4. | | | | |
|---|---|---|---|---|
| Element | Threshold values of heavy metals content of the leachate | Example 1: powders and ashes from steelworks furnaces | Example 2: powders and ashes from incinerator furnaces | Example 3: mixture of powders and ashes from steelworks furnaces and incinerators |
| | mg/l DIN 38414-S4 (non-special waste) | mg/l | mg/l | mg/l |
| As | 0.5 | <0.050 | <0.050 | <0.050 |
| Cd | 0.2 | 0.001 | 0.003 | 0.006 |
| Cu | 5 | 0.43 | 0.18 | 0.17 |
| Crt | 2 | 0.24 | 0.13 | 0.12 |
| Hg | 0.05 | <0.0020 | <0.0020 | <0.0020 |
| Ni | 1 | <0.010 | <0.010 | <0.010 |
| Pb | 1 | 0.005 | 0.015 | 0.015 |
| Zn | 5 | <0.050 | <0.050 | <0.10 |

**Table 2:**

| Mechanical resistance to compression of the pellets of the inertised inorganic wastes, according to guidelines of the uniaxial compression test, standard ASTM E-9, applying an increasing force on the material up to breakage or deformation. | | |
|---|---|---|
| | Compression resistance on the cylindrical bases of the pellet | Compression resistance on the generatrix of the pellet cylinder |
| | Newtons ASTM E-9 | Newtons ASTM E-9 |
| Example 1: powders and ashes from steelworks furnaces | 500 | 1000 |
| Example 2: powders and ashes from incinerator furnaces | 1000 | 1000 |
| Example 3: mixture of powders and ashes from steelworks furnaces and incinerator furnaces | 1000 | 1000 |

## Claims

1. Procedure for the inertisation of inorganic wastes from thermal processes, characteristed in that it includes the following stages:
i) Preparation of a mixture which includes:
a) between 10% and 90% of inorganic wastes expressed in dry weight; and
b) between 5% and 45% of sludge expressed in dry weight; the rest being water;
in which said sludge includes at least 15% fibre expressed in dry weight;
ii) Stirring the mixture prepared in stage i);
iii)Optionally, carrying out a stage of breaking down the mixture obtained in stage ii);
iv) Compaction and agglomeration of the mixture thus prepared.

2. Procedure according to Claim 1, **characterised in that** the preparation of the mixture of stage i) includes:
a) between 35% and 80% of inorganic wastes expressed in dry weight; and
b) between 10% and 35% of sludge expressed in dry weight; the resting being water;
in which said sludge includes at least 15% of fibre expressed in dry weight.

3. Procedure according to Claim 1, **characterised in that** said sludge includes at least 25% of fibre expressed in dry weight.

4. Procedure according to Claim 1, **characterised in that** said sludge includes at least 40% of fibre expressed in dry weight.

5. Procedure according to any of the preceding claims, **characterised in that** said sludge also includes at least 15% of calcium carbonate and kaolin.

6. Procedure according to any of the preceding claims, **characterised in that** said sludge is the residual product from the treatment and purification of waste waters from the papermaking industry.

7. Procedure according to Claim 1, **characterised in that** in said stage iv) said compaction and agglomeration are carried out by means of pelletisation or briquettisation.

8. Procedure according to Claim 1, **characterised in that** once stage iv) of compaction and agglomeration has been completed, an additional stage v) of drying is carried out.

9. Procedure according to Claims 1 or 2, **characterised in that** said inorganic wastes include heavy metals.

10. Procedure according to any of Claims 1, 2 or 9, **characterised in that** said inorganic wastes come from electric arc furnances in steelworks and/or municipal solid wastes incineration furnaces.

11. Utilisation of a mixture which includes between 5% and 45% of sludge according to Claim 1, for the inertisation of inorganic wastes from thermal processes.
